Europäisches Patentamt

(19) European Patent Office

Office européen des brevets

(11) Numéro de publication: **0 158 541 B1**

(12) **FASCICULE DE BREVET EUROPEEN**

(45) Date de publication du fascicule du brevet:
09.12.87

(21) Numéro de dépôt: 85400156.7

(22) Date de dépôt: 31.01.85

(51) Int. Cl.⁴: **C 04 B 28/26** // (C04B28/26, 14:46, 22:10, 22:12),(C04B28/26, 14:46, 22:10, 22:14)

(54) Composition destinée à la confection de revêtements.

(30) Priorité: 06.02.84 FR 8401764
15.01.85 FR 8500521

(43) Date de publication de la demande:
16.10.85 Bulletin 85/42

(45) Mention de la délivrance du brevet:
09.12.87 Bulletin 87/50

(84) Etats contractants désignés:
AT BE CH DE GB IT LI LU NL SE

(56) Documents cités:
EP - A - 0 004 882
FR - A - 1 417 893
FR - A - 2 353 624
US - A - 2 440 969
US - A - 4 263 048

CHEMICAL ABSTRACTS, vol. 97, no. 12, septembre 1982, page 328, no. 97323w, Columbus, Ohio, US; & JP - A - 82 11348 (M. MORITA) 03-03-1982
CHEMICAL ABSTRACTS, vol. 99, no. 24, 12 décembre 1983, page 285, no. 199701b, Columbus, Ohio, US; & JP - A - 58 141 284 (S. KATO) 22-08-1983

(73) Titulaire: SOCIETE FRANCAISE HOECHST Société anonyme dite:, 3, avenue du Général de Gaulle, F-92800 Puteaux (FR)

(72) Inventeur: Rivoallon, Jean, 16bis, Allée des Avenues, F-60200 Complègne (FR)

(74) Mandataire: Rinuy, Santarelli, 14, avenue de la Grande Armée, F-75017 Paris (FR)

## Description

La présente invention concerne une composition destinée à la confecton de revêtements.

Actuellement, on connaît des revêtements isolants, insonores et ignifuges, réalisés à partir de laine de roche et obtenus par projection d'un mélange extemporané de laine de roche, de ciment et d'eau avec une lance adéquate.

Cependant, de tels revêtements présentent un temps de prise de quelques heures; ils nécessitent de ce fait, très souvent, surtout lorsque leur épaisseur est importante, la présence d'un treillis métallique de soutien et ils libèrent lors de leur confection des poussières de ciment nocives, nécessitant une protection spéciale du personnel.

Or, la Demandesse a découvert de façon tout-à-fait inattendue, une composition à base de laine de roche et de silicates d'au moins un métal alcalin, susceptible de remédier à ces inconvénients.

Elle permet la correction aisée de revêtements isolants, insonores et ignifuges présentant, en outre, des caractéristiques physiques améliorées, leur conférant notamment une vitesse de prise rapide et une faible densité.

La composition selon l'invention destinée à la confection de revêtements par projection au moyen d'une lance d'un mélange à base de laine de roche A présentant un temps de prise quasi instantané est caractérisée par le fait qu'elle comprend nécessairement la combinaison de (1) au moins un produit en poudre B renfermant au moins 30% de bicarbonate de sodium ou de potassium, le reste comprenant un composé à caractère acide choisi entre le chlorure de calcium, l'acide sulfamique et le bicarbonate de sodium, en association ou non avec un silicate solide de sodium ou de potassium et de (2) au moins une solution aqueuse C de siliate de sodium ou de potassium.

Suivant un mode de réalisation particulier, la composition selon l'invention comprend (1) au moins un produit B en poudre renfermant au moins un tiers en parties en poids de bicarbonate de sodium ou de potassium, le reste comprenant du chlorure de calcium et au moins un silicate solide de sodium ou de potassium et (2) au moins une solution aqueuse C de silicate de sodium ou de potassium.

La position selon l'invention est préparée juste avant emploi, par mélange intime des trois produits A, B et C.

Le produit A est de la laine de roche à fibres longues couramment commercialisée pour cette application; habituellement, les fibres ont un diamètre de 4 à 6 micromètres et une longueur de 1 à 2 centimètres.

Suivant une forme de réalisation avantageuse, le produit B est une poudre, contenant pondéralement:

— de 30 à 60% de bicarbonate de sodium ou de potassium;

— de 20 à 50% de chlorure de calcium cristallisé avec deux molécules d'eau;

— de 10 à 30% de silicate de sodium ou de potassium atomisé, commercial, de rapport pondéral $SiO_2/M_2O$ compris entre 2 et 3,35 lorsque M représente du sodium et entre 2 et 2,25 lorsque M représente du potassium, de rapport moléculaire $SiO_2/M_2O$ compris entre 2 et 3,4 lorsque M représente du sodium et entre 3,1 et 3,5 lorsque m représente du potassium, de densité apparente comprise entre 0,4 et 0,7 et contenant 20 ± 5% en poids d'eau.

Le produit C est un liquide aqueux contenant pondéralement:

— de 0 à 100%, avantageusement de 60 à 80% de silicate de sodium liquide commercial, de rapport pondéral $SiO_2/Na_2O$ compris entre 1,60 et 3,35, de rapport moléculaire compris entre 1,65 et 3,45 et contenant 60 ± 10% en poids d'eau;

— de 100 à 0%, avantageusement de 40 à 20% de silicate de potassium liquide commercial, de rapport pondéral $SiO_2/K_2O$ compris entre 1,8 et 2,6 et de rapport moléculaire compris entre 2,85 et 4,1 et contenant 70 ± 10% d'eau.

Dans ce mode de réalisation de l'invention, le produit B renferme de préférence pondéralement de 30 à 60% de bicarbonate de potassium, de 20 à 50% de chlorure de calcium cristallisé avec deux molécules d'eau et de 10 à 30% de silicate de sodium atomisé de rapport pondéral $SiO_2/Na_2O$ 3,35, de rapport moléculaire 3,46 et contenant 22 ± 2% en poids d'eau, désigné ci-après «silicate de sodium atomisé 5 Na TS» et le produit C renferne pondéralement de 60 à 80% de silicate de sodium liquide, commercial, de rapport pondéral $SiO_2/Na_2O$ 3,35, de rapport moléculaire 3,45 et contenant 65 ± 4% d'eau, désigné ci-après «silicate de sodium liquide, Na 4/3» et de 40 à 20% de silicate de potassium liquide, de rapport pondéral $SiO_2/K_2O$ 2,6 de rapport moléculaire d'environ 4 et contenant 75 ± 4% d'eau, désigné ci-après «silicate de potassium liquide KA/O».

Avantageusement, une telle composition selon l'invention contient en proportions pondérales:

— de 30 à 60% de produit A;
— de 5 à 15% de produit B; et
— de 30 à 60% de produit C, et, mieux encore:
— de 40 à 55% de produit A;
— de 6 à 12% de produit B; et
— de 40 à 50% de produit C.

Plus particulièrement, la composition selon l'invention contient en proportions pondérales:

— de 40 à 55% de produit A;
— de 6 à 12% de produit B renfermant pondéralement de:
  · de 30 à 60% de bicarbonate de potassium,
  · de 20 à 50% de chlorure de calcium cristallisé avec deux molécules d'eau,
  · de 10 à 30% de silicate de sodium atomisé 5 Na TS;
— de 40 à 60% de produit C renfermant pondéralement de:
  · 60 à 80% de silicate de sodium liquide Na 4/1,
  · 40 à 40% de silicate de potassium liquide KA/O.

Suivant une autre forme de réalisation avantageuse, la composition selon l'invention comprend (1) au moins un produit (B) en poudre renfermant, au moins, 30% en poids de bicarbonate de potassium, le reste comprenant de l'acide sulfamique et, éventuellement, du bicarbonate de sodium et (2) au moins une solution aqueuse (C) de silicate de sodium ou de potassium.

Suivant cette forme de réalisation, le produit B est une poudre, contenant pondéralement:

— de 30 à 98% de bicarbonate de potassium,

— de 2 à 10% d'acide sulfamique,

— et, si nécessaire, le complément à 100% de bicarbonate de sodium.

Le produit C est un liquide contenant de 0 à 40% d'eau et de 100 à 60% d'un mélange de 0 à 100%, avantageusement de 60 à 80% de silicate de sodium liquide commercial, de rapport pondéral $SiO_2/Na_2O$ compris entre 1,60 et 3,35, de rapport moléculaire compris entre 1,65 et 3,45 et contenant 60 ± 10% en poids d'eau, et de 100 à 0%, avantageusement de 40 à 20% de silicate de potassium liquide commercial, de rapport pondéral $SiO_2/K_2O$ compris entre 1,8 et 2,6 et de rapport moléculaire compris entre 2,85 et 4,1 et contenant 70 ± 10% en poins d'eau.

Dans ce mode de réalisation, le produit B renferme pondéralement de 35 à 60% de bicarbonate de potassium, de 60 à 35% de bicarbonate de sodium et de 5 à 7% d'acide sulfamique et le produit C renferme pondéralement de 0 à 40% d'eau et de 100 à 60% d'un mélange:

— de 60 à 80% de silicate de sodium liquide commercial, de rapport pondéral $SiO_2/Na_2O$ 3,35, de rapport moléculaire 3,45 et contenant 65 ± 4% d'eau, désigné ci-après «silicate de sodium liquide Na 4/1» et de 40 à 20% de silicate de potassium liquide, de rapport pondéral $SiO_2/K_2O$ 2,6, de rapport moléculaire d'environ 4 et contenant 75 ± 4% d'eau, désigné ci-après «silicate de potassium liquide KA/O».

La composition selon l'invention contient en proportions pondérales:

— de 30 à 65% de produit A,

— de 3 à 10% de produit B et,

— de 25 à 60% de produit C, et mieux encore:

— de 40 à 65% de produit A,

— de 4 à 6% de produit B; et

— de 30 à 55% de produit C.

Ainsi, une composition selon l'invention peut être l'une des compositions données ci-après à titre d'exemples.

La composition selon l'invention présente un temps de prise quasi instantané. De ce fait, elle est préparée extemporanément par mélange des produits A, B, et C dans le cône d'éjection d'une lance à projection couramment utilisée par l'homme de métier pour réaliser des revêtements à base de laine de roche et de ciment. Cette lance est alimentée en produits A, B et C par des moyens connus. Ainsi, les produits A, et B, solides, seuls ou en mélange, sont mis en suspension puis propulsés vers la buse centrale de la lance par de l'air comprimé.

Quant au produit C, liquide, il est acheminé vers la lance, sous pression, grâce à une pompe puis il est éjecté par des buses latérales réparties à la périphérie de la buse centrale. La composition selon l'invention est ainsi obtenue au cours de sa projection sur les parois à enduire. Grâce à son temps de prise très rapide, la composition se fixe sur la paroi quelle que soit sa pente, aussi bien sur des parois verticales que sur des plafonds, sans produire de coulures et/ou de décrochement, et ceci, jusqu'à des épaisseurs de dépôt de 100 mm, tout en laissant la possibilité à l'homme de métier expérimenté de la travailler pendant quelques minutes à la truelle ou à la taloche, de manière à améliorer la présentation du revêtement ainsi obtenu.

En outre, le temps de prise quasi instantané de la composition selon l'invention ne permet pas à l'air occlus dans le revêtement de s'échapper. En effet, lorsque la composition selon l'invention est projetée sur la paroi pour former un revêtement, un certain volume d'air est piégé. De ce fait, on obtient un revêtement très poreux, de faible densité, de l'ordre de 120-130 ± 15 kg au $m^3$ nettement inférieure à la densité de l'ordre de 250 ± 25 kg au $m^3$ des revêtements connus à base de laine de roche et de ciment.

En raison de leur faible densité et de leur structure poreuse, les revêtements obtenus avec la composition selon l'invention présentent d'excellentes propriétés isolantes et ignifuges et ils peuvent être appliqués aisément, en une seule passe, jusqu'à des épaisseurs de 10 cm sur des parois de pentes très diverses, aussi bien verticales que horizontales du type plafond.

A titre illustratif, on donnera ci-après deux compositions selon l'invention permettant d'obtenir 2,5 $m^2$ environ d'un revêtement de 10 cm d'épaisseur, soit 0,25 $m^3$, puis deux compositions selon l'invention permettant d'obtenir 1 $m^2$ environ d'un revêtement de 10 cm d'épaisseur, soit 0,10 $m^3$.

*Première composition*

— 25 kg (44,4%) de laine de roche à fibres longues, de diamètre de 4 à 6 micromètres et de 5 à 6 cm de longueur;

— 2,5 kg (4,4%) de bicarbonate de potassium;

— 2,5 kg (4,4%) de chlorure de calcium cristallisé avec deux molécules d'eau;

— 1,25 kg (2,2%) de silicate de sodium atomisé 5 Na TS;

— 17 kg (30,2%) de silicate de sodium liquide Na 4/1;

— 8 kg (14,2%) de silicate de potassium liquide KA/O.

*Deuxième composition*

Cette composition est identique à la première composition, sauf que l'on n'utilise que 1,25 kg de chlorure de calcium cristallisé avec deux molécules d'eau. Elle présente en pourcentages pondéraux, les valeurs suivantes:

— 45,5% de laine de roche;

— 4,5% de bicarbonate de potassium;

— 2,25% de chlorure de calcium cristallisé avec deux molécules d'eau;

—2,25% de silicate de sodium atomisé 5 Na TS;

— 31% de silicate de sodium liquide Na 4/1;

— 14,5% de silicate de potassium liquide KA/O.

De multiples formules peuvent être utilisées en modifiant, en particulier, les quantités de chlorure de calcium introduites.

Bien entendu, le chlorure de calcium cristallisé avec deux molécules d'eau peut être remplacé par la quantité équivalente de chlorure de calcium anhydre ou cristallisé avec 4 ou 6 molécules d'eau.

*Troisième composition*
— 10 kg (55,5%) de laine de roche à fibres longues, de diamètre de 4 à 6 micromètres et de 5 à 6 de longueur;
— 0,6 kg (3,33%) de bicarbonate de potassium;
— 0,35 kg (1,95%) de bicarbonate de sodium;
— 0,05 kg (0,27%) d'acide sulfamique;
— 4,75 kg (26,4%) de silicate de sodium liquide Na 4/1;
— 2,25 kg (12,5%) de silicate de potassium liquide KA/O.

*Quatrième composition*
— 10 kg (47,62%) de laine de roche à fibres longues, de diamètre de 4 à 6 micromètres et de 5 à 6 cm de longueur;
— 0,6 kg (2,86%) de bicarbonate de potassium;
— 0,35 kg (1,66%) de bicarbonate de sodium;
— 0,05 kg (0,24%) d'acide sulfamique;
— 3 kg (14,28%) d'eau,
— 4,75 kg (22,62%) de silicate de sodium liquide Na 4/1;
— 2,25 kg (10,71%) de silicate de potassium liquide KA/O.

Il est bien entendu que la présente invention n'a été décrite qu'à titre purement explicatif et nullement limitatif et que toute modification pourra y être apportée sans sortir de son cadre.

## Revendications

1. Composition destinée à la confection de revêtements par projection, au moyen d'une lance, d'un mélange à base de laine de roche (A) composition caractérisée par un temps de prise quasiment instantané et par sa formulation comprenant nécessairement la combinaison de (1) au moins un produit en poudre (B) renfermant au moins 30% de bicarbonate de sodium ou de potassium, le reste comprenant un composé à caractère acide choisi entre le chlorure de calcium, l'acide sulfamique et le bicarbonate de sodium, en association ou non avec un silicate solide de sodium ou de potassium et de (2) au moins une solution aqueuse (C) de silicate de sodium ou de potassium.

2. Composition selon la revendication 1, caractérisée en ce qu'elle comprend (1) au moins un produit (B) en poudre renfermant au moins un tiers en parties en poids de bicarbonate de sodium ou de potassium, le reste comprenant du chlorure de calcium et au moins un silicate solide de sodium ou de potassium et (2) au moins une solution aqueuse (C) de silicate de sodium ou de potassium.

3. Composition selon la revendication 1, caractérisée en qu'elle comprend (1) au moins un produit (B) en poudre renfermant, au moins, 30% en poids de bicarbonate de potassium, le reste comprenant de l'acide sulfamique et, éventuellement, du bicarbonate de sodium et (2) au moins une solution aqueuse (C) de silicate de sodium ou de potassium.

4. Composition selon la revendication 1 ou 2, caractérisée en ce qu'elle comprend environ en poids:
— de 30 à 60% de laine de roche (A);

— de 5 à 15% d'un produit (B) en poudre, constitué:
· de 30 à 60% de bicarbonate de sodium ou de potassium,
· de 20 à 50% de chlorure de calcium cristallisé avec deux molécules d'eau,
· de 10 à 30% de silicate de sodium ou de potassium atomisé commercial;
— de 30 à 60% d'un liquide aqueux (C) constitué:
· de 0 à 100% de silicate de sodium liquide commercial,
· de 100 à 0% de silicate de potassium liquide commercial

5. Composition selon la revendication 1 ou 2, caractérisée en ce qu'elle comprend environ en poids:
— de 30 à 60% de laine de roche (A);
— de 5 à 15% d'un produit (B) en poudre, constitué:
· de 30 à 60% de bicarbonate de potassium,
· de 20 à 50% de chlorure de calcium cristallisé avec deux molécules d'eau,
· de 10 à 30% de silicate de sodium atomisé commercial;
— de 30 à 60% d'un liquide aqueux (C) constitué:
· de 60 à 80% de silicate de sodium liquide commercial,
· de 40 à 20% de silicate de potassium liquide commercial.

6. Composition selon la revendication 5, caractérisée par le fait que le silicate de sodium atomisé utilisé présente un rapport pondéral $SiO_2/Na_2O$ 3,35, un rapport moléculaire $SiO_2/Na_2O$ de 3,46 et un taux d'eau de 22 ± 2%.

7. Composition selon la revendication 5, caractérisée par le fait que le silicate de sodium liquide utilisé présente un rapport pondéral $SiO_2/Na_2O$ de 3,35, un rapport moléculaire de 3,45 et un taux d'eau de 65 ± 4%.

8. Composition selon la revendication 5, caractérisée par le fait que le silicate de potassium liquide utilisé présente un rapport pondéral $SiO_2/K_2O$ de 2,6, un rapport moléculaire d'environ 4 et un taux d'eau de 75 ± 4%.

9. Composition selon la revendication 1 ou 2, caractérisée par le fait qu'elle renferme pondéralement:
— de 40 à 55% de laine de roche (A);
— de 6 à 12% de produit (B) en poudre, constitué:
· de 30 à 60% de bicarbonate de potassium,
· de 20 à 50% de chlorure de calcium cristallisé avec deux molécules d'eau;
— de 10 à 30% de silicate de sodium atomisé tel que défini à la revendication 6;
— de 40 à 50% d'un liquide aqueux (C) constitué:
· de 60 à 80% de silicate de sodium liquide tel que défini à la revendication 7,
· de 40 à 20% de silicate de potassium liquide tel que défini à la revendication 8.

10. Composition selon la revendication 1 ou 3, caractérisée en ce qu'elle comprend environ en poids:

— de 30 à 65% de laine de roche (A);

— de 3 à 10% d'un produit (B) en poudre, constitué:

· de 30 à 98% de bicarbonate de potassium,

· de 2 à 10% d'acide sulfamique,

· et, si nécessaire, le complément à 100% de bicarbonate de sodium;

— de 25 à 60% d'un liquide aqueux (C), constitué:

· de 0 à 40% d'eau,

· de 100 à 60% d'un mélange de 0 à 100% de silicate de sodium liquide commercial et de 100 à 0% de silicate des potassium liquide commercial.

11. Composition selon la revendication 10, caractérisée par le fait que le silicate de sodium liquide utilisé présente un rapport pondéral de $SiO_2/Na_2O$ de 3,35, un rapport moléculaire de 3,45 et un taux d'eau de 65 ± 4%.

12. Composition selon la revendication 10, caractérisée par le fait que le silicate de potassium liquide utilisé présente un rapport pondéral $SiO_2/K_2O$ de 2,6, un rapport moléculaire d'environ 4 et un taux d'eau de 75 ± 4%.

13. Composition selon la revendication 1 ou 3, caractérisée par le fait qu'elle renferme pondéralement:

— de 35 à 60% de laine de roche (A);

— de 3,5 à 6% de produit en poudre (B) constitué:

· de 60 à 35% de bicarbonate de potassium,

· de 35 à 60% de bicarbonate de sodium,

· de 5 à 7% d'acide sulfatique;

— de 35 à 60% d'un liquide aqueux (C) constitué:

· de 0 à 40% d'eau,

· de 100 à 60% d'un mélange constitué de:

— de 60 à 80% de silicate de sodium liquide tel que défini à la revendication 11,

— de 40 à 20% de silicate de potassium liquide tel que défini à la revendication 12.

14. Application d'une composition selon l'une quelconque des revendications 1 à 13, à la confection de revêtements isolants, insonores et ignifuges par projection au moyen d'une lance, les produits (A) et (B), solides, seuls ou en mélange, étant mis en suspension et propulsés par de l'air comprimé, vers la buse centrale de cette lance, le produit (C) liquide étant admis dans cette dernière sous pression et injecté par des buses latérales réparties à la périphérie de ladite buse centrale.

**Patenansprüche**

1. Zusammensetzung, die für die Herstellung von Überzügen durch Extrudieren einer Mischung auf Basis von Steinwolle (A) mit einer Spritze bestimmt ist, welche Zusammensetzung durch eine fast sofortige Abbindezeit und durch ihre Formulierung, die notwendigerweise die Kombination (1) mindestens eines Pulverproduktes (B), das zumindest 30% Natrium- oder Kaliumbicarbonat enthält, wobei der Rest aus einer Verbindung mit saurem Charakter ausgewählt aus Kalziumchlorid, Sulfamsäure und Natriumbicarbonat, gegebenenfalls in Vereinigung mit einem festen Natrium- oder Kaliumsilikat, besteht, und (2) mindestens einer wässerigen Natrium- oder Kaliumsilikatlösung (C) umfasst, gekennzeichnet ist.

2. Zusammensetzung nach Anspruch 1, dadurch gekennzeichnet, dass sie (1) mindestens ein Pulverprodukt (B), das zumindest ein Drittel in Gewichtsteilen Natrium- oder Kaliumbicarbonat enthält, wobei der Rest aus Kalziumchlorid und zumindest einem festen Natrium- oder Kaliumsilikat besteht, und (2) mindestens eine wässerige Natrium- oder Kaliumsilikatlösung (C) umfasst.

3. Zusammensetzung nach Anspruch 1, dadurch gekennzeichnet, dass sie (1) zumindest ein Pulverprodukt (B), das zumindest 30 Gew.-% Kaliumbicarbonat enthält, wobei der Rest aus Sulfamsäure und gegebenenfalls Natriumbicarbonat besteht, und (2) zumindest eine wässerige Natrium- oder Kaliumsilikatlösung (C) umfasst.

4. Zusammensetzung nach Anspruch 1 oder 2, dadurch gekennzeichnet, dass sie etwa

— 30 bis 60 Gew.-% Steinwolle (A);

— 5 bis 15 Gew.-% eines Pulverproduktes (B) bestehend aus

· 30 bis 60 Gew.-% Natrium- oder Kaliumbicarbonat,

· 20 bis 50 Gew.-% Kalziumchlorid kristallsiert mit zwei Molekülen Wasser,

· 10 bis 30 Gew.-% handelsüblichem atomisierten Natrium- oder Kaliumsilikat

— 30 bis 60 Gew.-% einer wässerigen Flüssigkeit (C) bestehend aus

· 0 bis 100 Gew.-% handelsüblichem flüssigen Natriumsilikat und

· 100 bis 0 Gew.-% handelsüblichem flüssigen Kaliumsilikat umfasst.

5. Zusammensetung nach Anspruch 1 oder 2, dadurch gekennzeichnet, dass sie etwa

— 30 bis 60 Gew.-% Steinwolle (A);

— 5 bis 15 Gew.-% eines Pulverproduktes (B) bestehend aus

· 30 bis 60 Gew.-% Kaliumbicarbonat,

· 20 bis 50 Gew.-% Kalziumchlorid kristallisiert mit zwei Molekülen Wasser,

· 10 bis 30 Gew.-% handelsüblichem atomisierten Natriumsilikat;

— 30 bis 60 Gew.-% einer wässerigen Flüssigkeit (C) bestehend aus

· 60 bis 80 Gew.-% handelsüblichem flüssigen Natriumsilikat und

· 40 bis 20 Gew.-% handelsüblichem flüssigen Kaliumsilikat umfasst.

6. Zusammensetzung nach Anspruch 5, dadurch gekennzeichnet, dass das verwendete atomisierte Natriumsilikat ein Gewichtsverhältnis $SiO_2/Na_2O$ von 3,35, ein Molverhältnis $SiO_2/Na_2O$ von 3,46 und einen Wassergehalt von 22 ± 2% aufweist.

7. Zusammensetzung nach Anspruch 5, dadurch gekennzeichnet, dass das verwendete flüssige Natriumsilikat ein Gewichtsverhältnis $SiO_2/Na_2O$ von 3,35, ein Molverhältnis von 3,45 und einen Wassergehalt von 65 ± 4% aufweist.

8. Zusammensetzung nach Anspruch 5, dadurch gekennzeichnet, dass das verwendete flüssige Kali-

umsilikat ein Gewichtsverhältnis SiO$_2$/K$_2$O von 2,6, ein Molverhältnis von etwa 4 und einen Wassergehalt von 75 ± 4% aufweist.

9. Zusammensetzung nach Anspruch 1 oder 2, dadurch gekennzeichnet, dass sie
— 40 bis 55 Gew.-% Steinwolle (A);
— 6 bis 12 Gew.-% Pulverprodukt (B) bestehend aus
· 30 bis 60 Gew.-% Kaliumbicarbonat und
· 20 bis 50 Gew.-% Kalziumchlorid kristallisiert mit zwei Molekülen Wasser;
— 10 bis 30 Gew.-% atomisiertes Natriumsilikat, wie in Anspruch 6 definiert,
— 40 bis 50 Gew.-% einer wässerigen Flüssigkeit (C) bestehend aus
· 60 bis 80 Gew.-% flüssigem Natriumsilikat, wie in Anspruch 7 definiert, und
· 40 bis 20 Gew.-% flüssigem Kaliumsilikat, wie in Anspruch 8 definiert,
enthält.

10. Zusammensetzung nach Anspruch 1 oder 3, dadurch gekennzeichnet, dass sie etwa
— 30 bis 65 Gew.-% Steinwolle (A);
— 3 bis 10 Gew.-% eines Pulverproduktes (B) bestehend aus
· 30 bis 98 Gew.-% Kaliumbicarbonat,
· 2 bis 10 Gew.-% Sulfaminsäure, wenn notwendig, mit Natriumbicarbonat auf 100% ergänzt;
— 25 bis 60 Gew.-% einer wässerigen Flüssigkeit (C) bestehend aus
· 0 bis 40 Gew.-% Wasser und
· 100 bis 60 Gew.-% einer Mischung aus 0 bis 100 Gew.-% handelsüblichem flüssigen Natriumsilikat und 100 bis 0 Gew.-% handelsüblichem flüssigen Kaliumsilikat
umfasst.

11. Zusammensetzung nach Anspruch 10, dadurch gekennzeichnet, dass das verwendete flüssige Natriumsilikat ein Gewichtsverhältnis SiO$_2$/Na$_2$O von 3,35, ein Molverhältnis von 3,45 und einen Wassergehalt von 65 ± 4% aufweist.

12. Zusammensetzung nach Anspruch 10, dadurch gekennzeichnet, dass das verwendete flüssige Kaliumsilikat ein Gewichtsverhältnis SiO$_2$/K$_2$O von 2,6, ein Molverhältnis von etwa 4 und einen Wassergehalt von 75 ± 4% aufweist.

13. Zusammensetzung nach Anspruch 1 oder 3, dadurch gekennzeichnet, dass sie
— 35 bis 60 Gew.-% Steinwolle (A);
— 3,5 bis 6 Gew.-% des Pulverproduktes (B) bestehend aus
· 60 bis 35 Gew.-% Kaliumbicarbonat,
· 35 bis 60 Gew.-% Natriumbicarbonat und
· 5 bis 7 Gew.-% Sulfaminsäure;
— 35 bis 60 Gew.-% einer wässerigen Flüssigkeit (C) bestehend aus
· 0 bis 40 Gew.-% Wasser und
· 100 bis 60 Gew.-% einer Mischung bestehend aus
— 60 bis 80% flüssigem Natriumsilikat, wie in Anspruch 11 definiert, und
— 40 bis 20 Gew.-% flüssigem Kaliumsilikat, wie in Anspruch 12 definiert,
enthält.

14. Verwendung einer Zusammensetzung nach einem der Anspüche 1 bis 13 zum Herstellen von isolierenden, schalldichten und feuerfesten Überzügen durch Extrudieren mit einer Spritze, wobei die festen Produkte (A) und (B), getrennt oder in Mischung, in Suspension gebracht und durch komprimierte Luft zu der mittleren Düse dieser Spritze geführt werden und wobei das flüssige Produkt (C) in diese letztere unter Druck einströmen gelassen und durch seitliche Düsen, die an der Peripherie der genannten mittleren Düse angeordnet sind, gespritzt wird.

## Claims

1. Composition intended for the production of coatings by projecting, by means of a gun, a mixture based on rock wool (A), the composition being characterized by a virtually instantaneous setting time and by its formulation necassarily comprising the combination of (1) at least one powdered product (B) containing at least 30% of sodium bicarbonate or potassium bicarbonate, the remainder comprising a compound that is acidic in nature, chosen from calcium chloride, sulphamic acid and sodium bicarbonate, in combination or otherwise with a solid sodium or potassium silicate, and (2) at least one aqueous solution (C) of sodium silicate or potassium silicate.

2. Composition according to Claim 1, characterized in that it comprises (1) at least one powdered product (B) containing at least one-third, in parts by weight, of sodium bicarbonate or potassium bicarbonate, the remainder comprising calcium chloride and at least one solid sodium or potassium silicate, and (2) at least one aqueous solution (C) of sodium silicate or potassium silicate.

3. Composition according to Claim 1, characterized in that it comprises (1) at least one powdered product (B) containing, at least, 30% by weight of potassium bicarbonate, the remainder comprising sulphamic acid and, optionally, sodium bicarbonate, and (2) at least one aqueous solution (C) of sodium silicate or potassium silicate.

4. Composition according to Claim 1 or 2, characterized in that it comprises approximately by weight:
— from 30 to 60% of rock wool (A);
— from 5 to 15% of a powdered product (B) consisting of:
· from 30 to 60% of sodium bicarbonate or potassium bicarbonate,
· from 20 to 50% of calcium chloride crystallized with two molecules of water,
· from 10 to 30% of commercial pulverised sodium silicate or potassium silicate;
— from 30 to 60% of an aqueous liquid (C) consisting of;
· from 0 to 100% of commercial liquid sodium silicate,
· from 100 to 0% of commercial liquid potassium silicate.

5. Composition according to Claim 1 or 2, characterized in that it comprises approximately by weight:
— from 30 to 60% of rock wool (A);
— from 5 to 15% of a powdered product (B), consisting of:

- from 30 to 60% of potassium bicarbonate,
- from 20 to 50% of calcium chloride crystallized with two molecules of water,
- from 10 to 30% of commercial pulverized sodium silicate;
— from 30 to 60% of an aqueous liquid (C) consisting of:
  - from 60 to 80% of commercial liquid sodium silicate,
  - from 40 to 20% of commercial liquid potassium silicate.

6. Composition according to Claim 5, characterized in that the pulverized sodium silicate used has a weight ratio $SiO_2/Na_2O$ of 3.35, a molecular ratio $SiO_2/Na_2O$ of 3.46 and a water content of $22 \pm 2\%$.

7. Composition according to Claim 5, characterized in that the liquid sodium silicate used has a weight ratio $SiO_2/Na_2O$ of 3.35, a molecular ratio of 3.45 and a water content of $65 \pm 4\%$.

8. Composition according to Claim 5, characterized in that the liquid potassium silicate used has a weight ratio $SiO_2/K_2O$ of 2.6, a molecular ratio of approximately 4 and a water content of $75 \pm 4\%$.

9. Composition according to Claim 1 or 2, characterized in that it contains by weight:
— from 40 to 55% of rock wool (A);
— from 6 to 12% of powdered product (B), consisting of:
  - from 30 to 60% of potassium bicarbonate,
  - from 20 to 50% of calcium chloride crystallized with two molecules of water;
— from 10 to 30% of pulverized sodium silicate as defined in Claim 6;
— from 40 to 50% of an aqueous liquid (C) consisting of:
  - from 60 to 80% of liquid sodium silicate as defined in Claim 7,
  - from 40 to 20% of liquid potassium silicate as defined in Claim 8.

10. Composition according to Claim 1 or 3, characterized in that it comprises approximately by weight:
— from 30 to 65% of rock wool (A);
— from 3 to 10% of a powdered product (8), consisting of:

- from 30 to 98% of potassium bicarbonate,
- from 2 to 10% of sulphamic acid,
- and, if necessary, sodium bicarbonate to make up to 100%;
— from 25 to 60% of an aqueous liquid (C), consisting of:
  - from 0 to 40% of water,
  - from 100 to 60% of a mixture of 0 to 100% of commercial liquid sodium silicate and 100 to 0% of commercial liquid potassium silicate.

11. Composition according to Claim 10, characterized in that the liquid sodium silicate used has a weight ratio $SiO_2/Na_2O$ of 3.35, a molecular ratio of 3.45 and a water content of $65 \pm 4\%$

12. Composition according to Claim 10, characterized in that the liquid potassium silicate used has a weight ratio $SiO_2/K_2O$ of 2.6, a molecular ratio of approximately 4 and a water content of $75 \pm 4\%$.

13. Composition according to Claim 1 or 3, characterized in that it contains by weight:
— from 35 to 60% of rock wool (A);
— from 3.5 to 6% of powdered product (B) consisting of:
  - from 60 to 35% of potassium bicarbonate,
  - from 35 to 60% of sodium bicarbonate,
  - from 5 to 7% of sulphamic acid;
— from 35 to 60% of an aqueous liquid (C) consisting of:
  - from 0 to 40% of water,
  - from 100 to 60% of a mixture consisting of:
— from 60 to 80% of liquid sodium silicate as defined in Claim 11,
— from 40 to 20% of liquid potassium silicate as defined in Claim 12.

14. Application of a composition according to any one of Claims 1 to 13 to the production of insulating, sound-proof and flame-retardant coatings by projection by means of a gun, the solid products (A) and (B), alone or mixed, being suspended and propelled by compressed air towards the central nozzle of this gun, the liquid product (C) being admitted into the latter under pressure and injected by lateral nozzles distributed at the periphery of the said central nozzle.